# FASCICULE DE BREVET EUROPEEN

(11) **EP 3 615 780 B1**
(45) Date de publication et mention de la délivrance du brevet: **02.06.2021**
(21) Numéro de dépôt: 18717368.7
(22) Date de dépôt: 12.04.2018
(51) Int. Cl.: F02C 7/14, F02K 3/115, F02C 7/047, F01D 25/14, F02C 7/18

(54) **ENSEMBLE PROPULSIF POUR AÉRONEF COMPORTANT DES ÉCHANGEURS DE CHALEUR AIR-LIQUIDE**
FLUGZEUGANTRIEBSANORDNUNG MIT LUFT-FLÜSSIGKEIT-WÄRMETAUSCHERN
AIRCRAFT PROPULSION ASSEMBLY COMPRISING AIR-LIQUID HEAT EXCHANGERS

(30) Priorité: 24.04.2017 FR 1753539
(43) Date de publication de la demande: 04.03.2020
(73) Titulaire: Safran Aircraft Engines, 75015 Paris (FR); Safran Nacelles, 76700 Gonfreville-l'Orcher (FR)
(72) Inventeur: ORIOL, Sébastien, 77550 Moissy-Cramayel (FR); BOUTALEB, Mohammed-Lamine, 77550 Moissy-Cramayel (FR); PEYRON, Vincent, Jean-François, 77550 Moissy-Cramayel (FR)
(74) Mandataire: Gevers & Orès
(86) Numéro de dépôt international: PCT/EP2018/059478
(87) Numéro de publication internationale: WO 2018/197232

(56) Documents cités:
- FR-A1- 3 039 208
- US-A1- 2009 165 995
- US-A1- 2014 209 286
- US-A1- 2016 131 036

## Description

### DOMAINE TECHNIQUE

La présente invention concerne un ensemble propulsif pour aéronef comportant des échangeurs de chaleur air-liquide, et en particulier air-huile.

### ETAT DE L'ART

L'état de l'art comprend notamment les documents FR-A1-3 001 253, FR-A1-3 027 624, US-A1-2016/131036, US-A1-2009/165995, FR-A1-3 039 208 et US-A1-2014/209286.

Un ensemble propulsif d'aéronef comprend un moteur du type turbomachine qui est entouré par une nacelle, cette nacelle comportant une lèvre annulaire d'entrée d'air notamment dans le moteur.

Dans le cas où la turbomachine est un turboréacteur à double flux, le flux d'air qui passe dans la lèvre d'entrée d'air lorsque l'aéronef est en vol traverse un aubage de soufflante puis se divise en un flux d'air primaire qui pénètre dans la turbomachine et en un flux d'air secondaire qui s'écoule autour de la turbomachine, à l'intérieur de la nacelle.

La lèvre d'entrée d'air se prolonge vers l'aval autour de la turbomachine par deux parois annulaires coaxiales respectivement interne et externe de la nacelle. La paroi interne de la nacelle délimite extérieurement la veine annulaire d'écoulement du flux secondaire et est donc balayée par ce flux en fonctionnement. La paroi externe de la nacelle est quant à elle balayée par le flux d'air qui s'écoule autour de la nacelle en fonctionnement.

Les éléments d'usure de la turbomachine, tels que les paliers doivent être constamment lubrifiés. L'huile utilisée pour lubrifier et refroidir les paliers peut atteindre des températures importantes et doit être refroidie. Il est connu d'utiliser un échangeur de chaleur air-huile afin de refroidir l'huile chaude avant de la réutiliser dans le moteur. L'échangeur peut être du type SACOC (*Surfacic Air Cooled Oil Cooler*) qui comporte des ailettes en saillie destinées à être balayées par un flux d'air de refroidissement ou du type ACOC (*Air Cooled Oil Cooler*) qui comprend une surface destinée à être balayée par un flux d'air de refroidissement. Ces échangeurs air/huile sont actuellement destinés à être balayés par le flux secondaire s'écoulant à l'intérieur de la nacelle, ce qui a tendance à augmenter les pertes de charge et contribuer à la baisse du rendement global de la turbomachine.

La présente invention propose un perfectionnement à cette technologie, qui est simple, efficace et économique.

### EXPOSE DE L'INVENTION

L'invention propose à cet effet un ensemble propulsif pour aéronef, comportant une turbomachine entourée par une nacelle comportant une lèvre annulaire d'entrée d'air se prolongeant autour de la turbomachine par deux parois respectivement interne et externe annulaires destinées à être balayées par des flux d'air au moins lorsque l'aéronef est en vol, caractérisé en ce que :
- lesdites parois interne et externe comprennent ou portent chacune au moins un réseau de canalisations destinées à transporter un liquide en contact avec ladite paroi interne ou ladite paroi externe, de façon à former des échangeurs de chaleur air-liquide respectivement interne et externe, les canalisations de chaque échangeur de chaleur interne ou externe étant raccordées en parallèle entre elles,
- un réseau de canalisations de la paroi interne ayant au moins une sortie de liquide raccordée en série avec au moins une entrée de liquide d'un réseau de canalisations de la paroi externe, et
- l'ensemble propulsif comprend des moyens de circulation du liquide, raccordés à au moins une entrée de liquide d'un réseau de canalisations de la paroi interne en vue de son alimentation en liquide, et raccordés à au moins une sortie de liquide d'un réseau de canalisations de la paroi externe en vue de la récupération du liquide.

Dans le cadre de la recherche de nouvelles surfaces d'échange thermique dans une turbomachine, un système de refroidissement d'un liquide, tel que l'huile moteur, en contact avec le flux d'air secondaire et le flux d'air extérieur avec un impact aérodynamique faible a été mis au point. Ce système consiste à utiliser les parois interne et externe de la nacelle comme surfaces d'échange entre le liquide et l'air. L'objet de cette invention est ainsi de proposer une architecture de circulation de liquide au niveau des parois de la nacelle dite « refroidissante » en optimisant le couple puissance dissipée et perte de charge générée, ainsi que la masse embarquée.

L'ensemble propulsif selon l'invention peut comprendre une ou plusieurs des caractéristiques ci-dessous, prises isolément les unes des autres ou en combinaison les unes avec les autres :
- la turbomachine est reliée à la nacelle par au moins un bras tubulaire de passage de servitudes, ladite au moins une entrée de liquide d'un réseau de canalisations de la paroi interne et ladite au moins une sortie de liquide d'un réseau de canalisations de la paroi externe étant sensiblement situées au niveau de ce bras,
- ledit bras est situé à 12 heures par analogie avec le cadran d'une horloge,
- lesdits réseaux ont une forme générale incurvée ou annulaire et s'étendent l'un autour de l'autre,
- les réseaux sont sectorisés et comprennent chacun au moins deux secteurs,
- chacune desdites canalisations comprend deux secteurs de 180° environ chacun,
- lesdites réseaux comprennent des canalisations s'étendant au moins en partie sensiblement parallèlement à un axe longitudinal de l'ensemble propulsif ou de la turbomachine,
- ladite au moins une sortie de liquide du réseau de canalisations de la paroi interne est raccordée à ladite au moins une entrée de liquide du réseau de canalisations de la paroi externe par au moins un collecteur,
- ladite au moins une sortie de liquide du réseau de canalisations de la paroi interne est raccordée à un premier collecteur interne et ladite au moins une entrée de liquide du réseau de canalisations de la paroi externe est raccordée à un second collecteur externe, lesdits premier et second collecteurs étant reliés entre eux par une ou plusieurs conduites s'étendant sensiblement radialement par rapport audit axe,
- ladite entrée de liquide du réseau de canalisations de la paroi interne est raccordée à une rampe d'alimentation et ladite sortie de liquide du réseau de canalisations de la paroi externe est raccordée à une rampe de récupération,
- au moins une tôle est rapportée et fixée, par exemple par brasage ou soudage, sur chacune desdites parois interne et externe et est conformée pour définir ledit réseau de canalisations correspondant avec cette paroi, et
- les collecteurs et/ou les rampes sont rapportés et fixés, par exemple par brasage ou soudage, sur lesdites parois interne et externe.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une vue schématique en coupe axiale d'un ensemble propulsif,
- la figure 2 est une demi-vue très schématique en coupe axiale d'une partie d'une nacelle d'un ensemble propulsif selon l'invention,
- la figure 3 est une vue à plus grande échelle d'un détail de la figure 2,
- la figure 4 est une vue schématique en coupe axiale d'une nacelle d'un ensemble propulsif selon l'invention,
- les figures 5 et 6 comprennent des schémas blocs illustrant des principes de circulation d'huile entre les parois interne et externe d'une nacelle,
- la figure 7 est un graphe illustrant l'évolution de la puissance dissipée en fonction du débit à iso-perte de charge lors du refroidissement d'huile pour chacun des principes des figures 5 et 6,
- la figure 8 comprend un schéma blocs illustrant le principe de circulation d'huile retenu entre les parois interne et externe d'une nacelle,
- la figure 9 est une vue schématique en coupe transversale d'une nacelle d'ensemble propulsif selon l'invention,
- la figure 10 est une vue schématique en coupe transversale d'une variante de réalisation d'une nacelle d'ensemble propulsif selon l'invention,
- la figure 11 est une vue agrandie d'un détail de la figure 1, et illustre une extrémité aval d'une nacelle équipée de réseaux de canalisations, et
- la figure 12 est une vue à plus grande échelle d'une partie de la figure 11.

### DESCRIPTION DETAILLEE

Un ensemble propulsif 10 comprend un moteur ou une turbomachine qui est entouré par une nacelle.

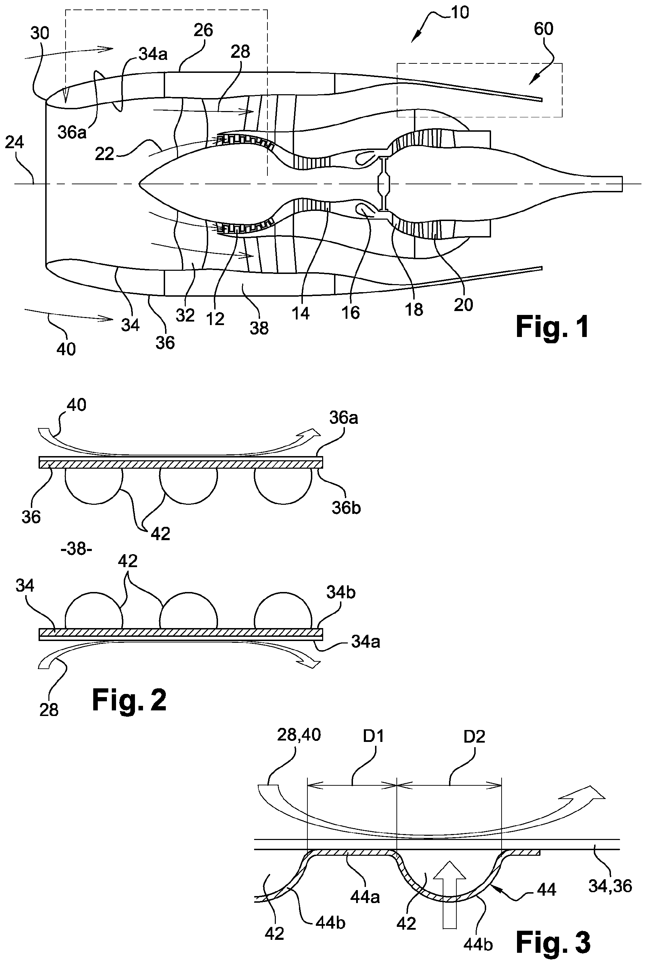

En référence à la figure 1, la turbomachine est un turboréacteur à double flux et à double corps qui comporte, de l'amont vers l'aval selon la direction d'écoulement des gaz, un compresseur basse pression 12, un compresseur haute pression 14, une chambre de combustion 16, une turbine haute pression 18 et une turbine basse pression 20, qui définissent une veine d'écoulement d'un flux primaire de gaz 22.

Le rotor de la turbine haute pression 18 est solidaire du rotor du compresseur haute pression 14 de manière à former un corps haute pression, tandis que le rotor de la turbine basse pression 20 est solidaire du rotor du compresseur basse pression 12 de manière à former un corps basse pression. Le rotor de chaque turbine entraîne en rotation le rotor du compresseur associé autour d'un axe 24 sous l'effet de la poussée des gaz provenant de la chambre de combustion 16.

La nacelle 26 s'étend autour de la turbomachine et définit autour de celle-ci une veine annulaire d'écoulement d'un flux secondaire 28. L'extrémité amont de la nacelle 26 définit une lèvre annulaire 30 d'entrée d'air dans laquelle pénètre un flux d'air qui traverse une soufflante 32 de la turbomachine, pour se diviser ensuite et former les flux primaire 22 et secondaire 28 précités.

La lèvre 30 a une demi-section axiale de forme générale en C dont l'ouverture est orientée axialement vers l'aval. Les bords annulaires respectivement interne et externe de la lèvre sont reliés respectivement à des parois annulaires respectivement interne 34 et externe 36 de la nacelle. Les parois 34, 36 s'étendent l'une autour de l'autre et sont espacées radialement l'une de l'autre pour définir un espace annulaire 38 qui sert au montage d'équipements de l'ensemble propulsif 10.

Comme on le voit sur la figure 1, la paroi interne 34 a sa surface radialement interne 34a qui définit extérieurement la veine d'écoulement du flux secondaire 28, qui est balayée par ce flux secondaire. La paroi externe 36 a sa surface radialement externe 36a qui est balayée par le flux d'air s'écoulant autour de la turbomachine en fonctionnement (flèches 40).

Les figures 2 à 4 illustrent un des aspects de l'invention consistant à prévoir des échangeurs de chaleur air-liquide, et de préférence air-huile, sur les parois 34, 36 de la nacelle 26. Un premier échangeur de chaleur est prévu sur la surface radialement externe 34b de la paroi interne 34 en vue de la circulation de liquide ou d'huile sur cette paroi et l'échange de chaleur directement avec cette paroi 34 balayée par le flux secondaire 28. Un second échangeur de chaleur est prévu sur la surface radialement interne 36b de la paroi externe 36 en vue de la circulation de liquide ou d'huile sur cette paroi et l'échange de chaleur directement avec cette paroi 36 balayée par le flux d'air 40.

Pour cela, les parois 34, 36 comprennent ou portent des réseaux de canalisations d'huile 42. Le ou les réseaux de chaque paroi comprend ou comprennent chacun plusieurs canalisations raccordées en parallèle entre elles. Chaque réseau de canalisations forme un échangeur de chaleur air-liquide sur la paroi interne 34 ou sur la paroi externe 36. Dans le cas où plusieurs tels échangeurs de chaleur sont prévus sur la paroi interne 34 et/ou la paroi externe 36, les échangeurs de chaleur d'une même paroi interne ou externe peuvent être reliés fluidiquement entre eux en série ou en parallèle.

Les canalisations peuvent avoir au moins en partie une orientation générale axiale et s'étendre ainsi sensiblement parallèlement à l'axe 24, sur une partie de la longueur. Dans ce cas, la coupe des figures 2 et 3 serait réalisée sensiblement perpendiculairement à l'axe 24.

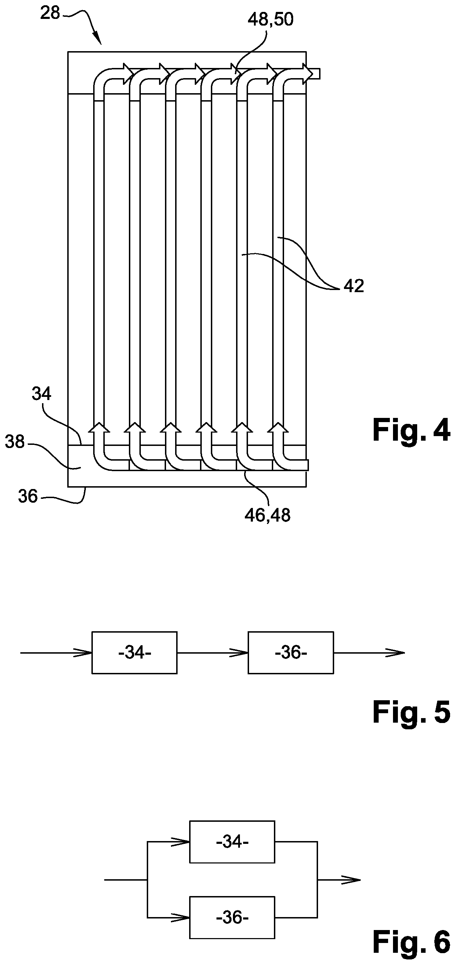

Les canalisations peuvent en variante avoir au moins en partie une orientation générale annulaire ou circonférentielle s'étendant autour de l'axe 24. Dans ce cas, la coupe des figures 2 et 3 serait réalisée dans un plan passant par l'axe 24. Dans ce dernier cas, les canalisations pourraient être disposées les unes à côté des autres le long de l'axe 24 (figure 4).

Les canalisations 42 sont avantageusement solidaires de la paroi 34, 36 correspondante.

Dans l'exemple représenté aux figures 2 et 3, les canalisations de chaque paroi 34, 36 sont formées par une tôle 44 rapportée et fixée, par exemple par brasage ou soudage, sur la paroi correspondante (figure 3). Chaque tôle 44 est conformée, par exemple par emboutissage, pour comprendre des premières portions annulaires 44a sensiblement planes appliquées et fixées sur la surface précitée de la paroi correspondante, et des secondes portions annulaires 44b à section axiale incurvée définissant les canalisations 42 avec la paroi correspondante.

Les dimensions D1, D2 des portions 44a, 44b et en particulier les volumes internes des canalisations 42 sont des paramètres prédéterminés en fonction des performances recherchées pour les échangeurs.

Les surfaces 34a, 36a en contact direct avec les flux d'air (flux secondaire 28 ou flux extérieur 40) ne sont avantageusement pas modifiées afin de ne pas générer de pertes aérodynamiques supplémentaires par rapport à une nacelle classique, ce qui amènerait une surconsommation de carburant pour compenser ces pertes.

L'alimentation en huile des canalisations 42 se fait de préférence par l'espace interne 38 de la nacelle (figure 4). La géométrie interne de l'alimentation doit également de préférence respecter les contraintes acoustiques et les contraintes de fabricabilité, ce qui a pour conséquence de limiter les dimensions D1 et D2.

Au niveau d'une même surface 34b, 36b, les canalisations sont alimentées en parallèle par un collecteur 48 ou une rampe d'alimentation 46. L'huile est ensuite récupérée au sein d'un collecteur 48 ou une rampe de récupération 50 raccordé en parallèle sur l'ensemble des canalisations. Les canalisations de chaque échangeur sont en outre raccordées en parallèle entre elles.

L'ensemble comprenant les canalisations 42, c'est-à-dire les tôles 44, les rampes et collecteurs sont de préférence soudés ou brasés sur la surface correspondante de la paroi 34, 36.

Les flux secondaire 28 et extérieur 40 sont différents en termes de température, vitesse, etc., ce qui fait que les conditions auxquelles sont exposées les surfaces 34a, 36a sont hétérogènes. Il est donc nécessaire de concevoir une architecture d'alimentation qui permette de maximiser la puissance thermique évacuée sur l'ensemble des points de vols. Les dimensions D1 et D2 font partie intégrante de la conception car ces paramètres influencent directement la répartition de débit et les pertes de charge dans l'huile.

L'objectif est de préférence de trouver l'optimum entre les trois paramètres suivant : puissance thermique évacuée, perte de charge et masse de liquide embarquée. Le liquide est préférablement de l'huile moteur, mais l'utilisation d'un liquide caloporteur autre que de l'huile est envisageable afin de refroidir l'huile moteur par un échangeur de chaleur huile/liquide caloporteur dédié. Le liquide caloporteur peut être la phase liquide d'un fluide diphasique alimentant les canalisations 42.

L'étude de deux surfaces distinctes, la surface extérieure 36a et la surface intérieure 34a, permet de connaître les tendances des architectures envisageables. Deux modes d'alimentation en huile de ces deux surfaces ont été envisagés : série (figure 5) ou parallèle (figure 6).

Dans le cas de la série (figure 5), l'invention revendiquée propose d'alimenter, dans un premier temps, la paroi interne 34 puis la paroi externe 36. Ce choix s'explique par le fait que cela permet de maximiser la différence de température entre l'air et l'huile pour obtenir le maximum d'échange thermique.

La surface extérieure 36b bénéficie d'une température d'air plus basse que dans le flux secondaire 28, mais a un coefficient de convection plus faible. Ainsi, le refroidissement de l'huile qui a lieu au niveau de la surface intérieure 34a (par échange avec le flux secondaire 28) permet tout de même de conserver une différence de température suffisante entre l'air et l'huile pour l'échange au niveau de la surface extérieure 36a.

Dans le cas parallèle (figure 6), ne faisant pas partie de l'invention et décrit ici à titre d'exemple, la géométrie des canalisations des deux parois définit la répartition du débit entre ces parois. Cependant, le phénomène d'hétérogénéité de débit peut intervenir et rendre difficile la maîtrise de cette répartition. En effet, l'échange entre deux surfaces ne travaillant pas dans les mêmes conditions peut amener des changements de viscosité de l'huile dans les canalisations. Ceci peut entraîner une modification de la répartition du débit entre les deux surfaces, ce qui est difficilement prévisible sur l'ensemble du domaine de vol.

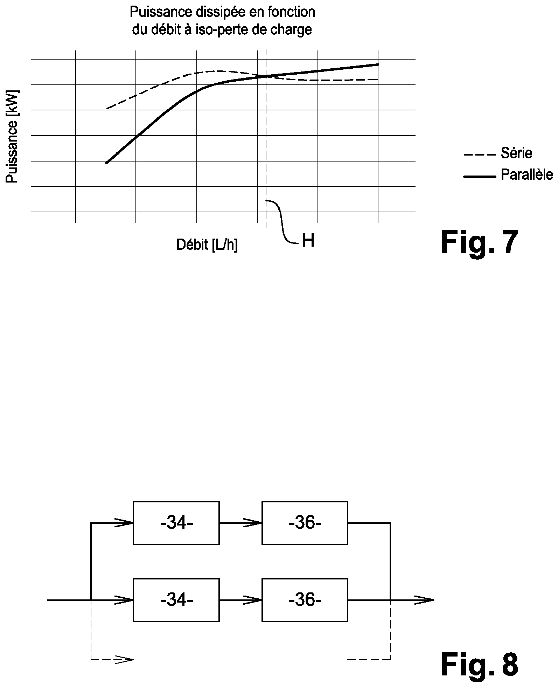

Le choix d'une architecture parallèle ou série va dépendre du couple puissance échangée / perte de charge. On peut distinguer deux zones de débits qui définissent l'utilisation des architectures (cf. figure 7).

On remarque qu'à partir d'un certain débit H, l'utilisation d'une architecture parallèle est plus intéressante d'un point de vue thermique. Cependant, la complexité d'une architecture parallèle (gestion de la répartition de débits et des hétérogénéités de débits) montre que d'un point de vue global, il est plus intéressant d'utiliser une architecture série même si celle-ci génère moins de puissance dissipée. D'autant plus que l'écart de puissance n'est pas significatif au-delà de cette valeur de débit H.

La valeur de débit H qui justifie la transition d'une architecture série à une architecture parallèle est très élevée. Dans le cadre d'une nacelle 26 refroidissante, le débit moyen vu par les surfaces de la nacelle est bien inférieur au débit de transition d'architecture. L'architecture qui met en série les canalisations des parois interne et externe est donc retenue.

Dans le cas de plusieurs surfaces d'échange thermique, il est donc préférable d'utiliser autant que possible une architecture série entre les surfaces afin de garder une architecture simple et efficace. Cependant, la mise en série de l'ensemble des surfaces utilisées génèrerait une perte de charge de l'échangeur beaucoup trop importante. Actuellement, la limitation en pression dans les canalisations de la nacelle contraint l'utilisation d'un maximum de deux surfaces en série.

Si toutes les surfaces sont mises en parallèle, la puissance dissipée est trop faible. En effet, chaque surface serait alimentée par un faible débit qui réduirait le coefficient d'échange convectif de l'huile. De plus, l'architecture serait fortement soumise aux hétérogénéités de débits entre les surfaces intérieure et extérieure.

Afin de limiter les hétérogénéités de débits et d'homogénéiser les échanges thermiques entre les différentes canalisations, il est plus intéressant d'utiliser une architecture composée de portions de deux surfaces en série (surface intérieure suivie d'une surface extérieure) que l'on alimentera en parallèle, comme représenté à la figure 8.

Cette architecture permet une alimentation optimale des surfaces et a été retenue dans le cadre de l'utilisation de la nacelle refroidissante. En effet, pour les mêmes surfaces utilisées, l'architecture série de l'ensemble des surfaces génère trop de perte de charge et n'est donc pas envisageable. L'architecture parallèle ne dissiperait pas assez de puissance thermique. C'est pourquoi l'architecture choisie optimise le couple puissance thermique / perte de charge en adoptant une architecture mixte série et parallèle.

Ainsi, le réseau de canalisations 42 de la paroi interne 34 a une ou des sorties d'huile raccordées en série à une ou des entrées d'huile du réseau de canalisations de la paroi externe 36. Dans le cas où la paroi interne 34 comprend deux voire au moins trois réseaux de canalisations 42 reliés en série, la ou les sorties d'huile concernées sont celles du dernier réseau de canalisations 42 de cette paroi dans le sens de la circulation de l'huile. L'ensemble propulsif comprend des moyens de circulation d'huile provenant de la turbomachine, raccordés à une ou des entrées d'huile du réseau de canalisations de la paroi interne, en vue de l'alimentation en huile en parallèle de ces entrées, et raccordés à une ou des sorties d'huile du réseau de canalisations de la paroi externe, en vue de la récupération de l'huile en parallèle de ces sorties. Comme évoqué dans ce qui précède, dans le cas où la paroi externe 36 comprend deux voire au moins trois réseaux de canalisations 42 reliés en série, la ou les entrées d'huile concernées sont celles du premier réseau de canalisations 42 de cette paroi dans le sens de la circulation de l'huile, et la ou les sorties d'huile concernées sont celles du dernier réseau de canalisations 42 de cette paroi dans le sens de la circulation de l'huile.

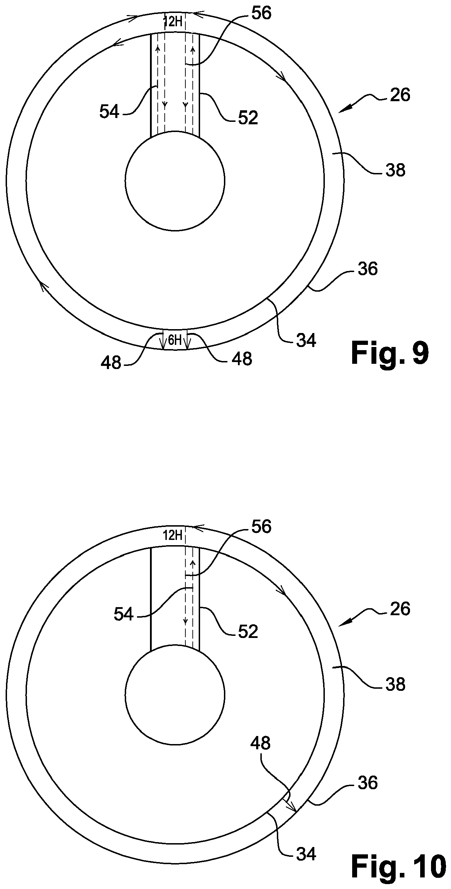

Dans l'exemple de réalisation illustré à la figure 9, la paroi interne 34 porte aux moins deux réseaux de canalisations qui s'étendent sur sensiblement 180° chacun. On pourrait également considérer que la paroi interne comprend un réseau de canalisations unique et sectorisé, le réseau comportant des secteurs de canalisations s'étendent sur sensiblement 180° chacune. De la même façon, la paroi externe 36 porte aux moins deux réseaux de canalisations qui s'étendent sur sensiblement 180° chacun. On pourrait également considérer que la paroi externe comprend un réseau de canalisations unique et sectorisé, le réseau comportant des secteurs de canalisations s'étendent sur sensiblement 180° chacune.

La turbomachine est reliée à la nacelle 26 par au moins un bras tubulaire 52 de passage de servitudes. Parmi ces servitudes, des conduites d'huile 54, 56 peuvent être prévues, notamment une conduite de départ d'huile 54 s'étendant sensiblement radialement à l'intérieur du bras 52 et permettant d'amener l'huile chaude provenant du moteur en direction des échangeurs de chaleur de la nacelle, et une conduite de retour d'huile 56 s'étendant également sensiblement radialement à l'intérieur du bras et permettant d'amener l'huile refroidie sortant des échangeurs de chaleur jusqu'au moteur en vue de sa réutilisation pour lubrifier et/ou refroidir des éléments du moteur tels que des paliers. Ces conduites de départ et de retour d'huile 54, 56 sont représentées sur les figures 9 et 10 par des traits en pointillés.

La conduite de départ d'huile 54 est reliée aux canalisations de la paroi interne 34 par au moins une rampe d'alimentation 46 (figure 4). Dans le cas où le bras 52 est situé à 12h par analogie avec le cadran d'une horloge, la rampe 46 est également située à 12h au niveau de l'extrémité radialement externe du bras. La conduite de retour d'huile 56 est reliée aux canalisations de la paroi externe par au moins une rampe de récupération telle que par exemple une rampe 50 (figure 4), qui est également située à 12h dans l'exemple précité. De manière générale, il peut être préféré d'avoir une seule rampe d'alimentation et une seule rampe de récupération, afin de ne pas pénaliser l'encombrement et la masse du système. Les deux rampes peuvent éventuellement être formées dans une même pièce.

Les sorties d'huile du réseau de canalisations de la paroi interne sont reliées aux entrées d'huile du réseau de canalisations de la paroi externe par des collecteurs 48 situés à 6h dans l'exemple précité. Dans l'exemple représenté, il y a deux collecteurs du fait de la division en deux secteurs de chaque réseau de canalisations : un premier collecteur pour le raccordement de premiers secteurs de canalisations du réseau de canalisations de la paroi interne à des premiers secteurs de canalisations du réseau de canalisations de la paroi externe, et un second collecteur pour le raccordement de seconds secteurs de canalisations du réseau de canalisations de la paroi interne à des seconds secteurs de canalisations du réseau de canalisations de la paroi externe. Dans l'exemple représenté, un premier circuit de refroidissement de liquide formé par les premiers secteurs de canalisations est symétrique d'un second circuit de refroidissement de liquide formé par les seconds secteurs de canalisations, par rapport à un plan longitudinal médian de la nacelle. Ce plan est aussi un plan de symétrie pour le bras de servitudes 52, et est donc vertical dans l'exemple précité.

L'architecture mixte permet de minimiser le nombre de canalisations par la circulation de l'huile dans un premier temps au niveau de la paroi interne (trajet aller de 12h à 6h) puis au niveau de la paroi externe (trajet retour de 6h à 12h).

Bien entendu, le raccordement des canalisations des premier et second circuits de refroidissement de liquide aux moyens de circulation d'huile provenant de la turbomachine n'est pas nécessairement à 12h. Il dépend de l'orientation du bras de servitudes 52 dans lequel passent les conduites de départ et de retour d'huile 54, 56. Par ailleurs, le raccordement des secteurs de canalisations par les collecteurs 48 n'est pas nécessairement à 6h. Il dépend notamment de l'étendue angulaire des secteurs de canalisations. Dans le cas où chacun des premier et second circuits de refroidissement de liquide comprend deux secteurs de canalisations de 180° environ, les collecteurs sont situés à 6h.

Les collecteurs 48 de raccordement des secteurs de canalisations des parois interne et externe peuvent être chacun « monocorps » et s'étendre dans tout l'espace radial entre les parois 34, 36 de la nacelle. En variante, chaque collecteur monocorps pourrait être remplacé par un collecteur en deux parties : un collecteur interne monté sur la paroi interne de la nacelle, et un collecteur externe monté sur la paroi externe de la nacelle. Ces collecteurs seraient reliés entre eux par une ou plusieurs conduites qui traverseraient l'espace 38 de la nacelle selon une direction pouvant être radiale ou oblique voire parallèle à une surface de la nacelle. La disposition d'une ou deux conduites seulement permettraient de libérer de l'espace à l'intérieur de la nacelle entre les deux parties du collecteur, pour intégrer si besoin un équipement empiétant dans cet espace libéré ou y faire passer d'autres canalisations ou des harnais électriques.

Le ou les réseaux de canalisations 42 de la paroi interne 34 de la nacelle ne sont pas nécessairement disposés en vis-à-vis radialement du ou des réseaux de canalisations 42 de la paroi externe 36. En d'autres termes, des échangeurs de chaleur air-liquide respectivement interne et externe peuvent être éloignés l'un de l'autre dans la direction longitudinale et/ou la direction circonférentielle de la nacelle. Par conséquent, une sortie de liquide d'un réseau de canalisations de la paroi interne n'est pas nécessairement en face d'une entrée de liquide d'un réseau de canalisations de la paroi externe avec laquelle la sortie de liquide est raccordée en série. Dans le cas susmentionné d'un collecteur interne (monté sur la paroi interne de la nacelle) relié à un collecteur externe (monté sur la paroi externe de la nacelle), la ou les conduites de liaison entre les collecteurs interne et externe peuvent présenter une longueur relativement importante selon la direction longitudinale et/ou la direction circonférentielle de la nacelle. Dans ce cas également, il peut être préféré d'avoir une seule rampe d'alimentation et une seule rampe de récupération.

La figure 10 illustre une variante de réalisation de l'invention dans lequel un seul circuit de refroidissement de liquide formé par des réseaux de canalisations 42 est prévu sur la nacelle. Le réseau de canalisations 42 de chaque paroi interne ou externe 34, 36 de la nacelle s'étend en direction circonférentielle sur une partie seulement de cette paroi. Dans l'exemple représenté, chaque réseau s'étend sur un angle d'environ 120° autour de l'axe 24. Comme suite aux explications ci-dessus relatives à l'exemple de la figure 9, on comprend qu'au moins une sortie d'huile du réseau de canalisations de la paroi interne est raccordée en série avec au moins une entrée d'huile du réseau de canalisations de la paroi externe par au moins un collecteur 48 situé aux alentours de 4h ou 5h. La conduite de départ d'huile 54 est reliée aux canalisations de la paroi interne 34 par au moins une rampe d'alimentation 46 située à 12h au niveau de l'extrémité radialement externe du bras de servitudes 52. La conduite de retour d'huile 56 est reliée aux canalisations de la paroi externe 36 par au moins une rampe de récupération qui est également située à 12h.

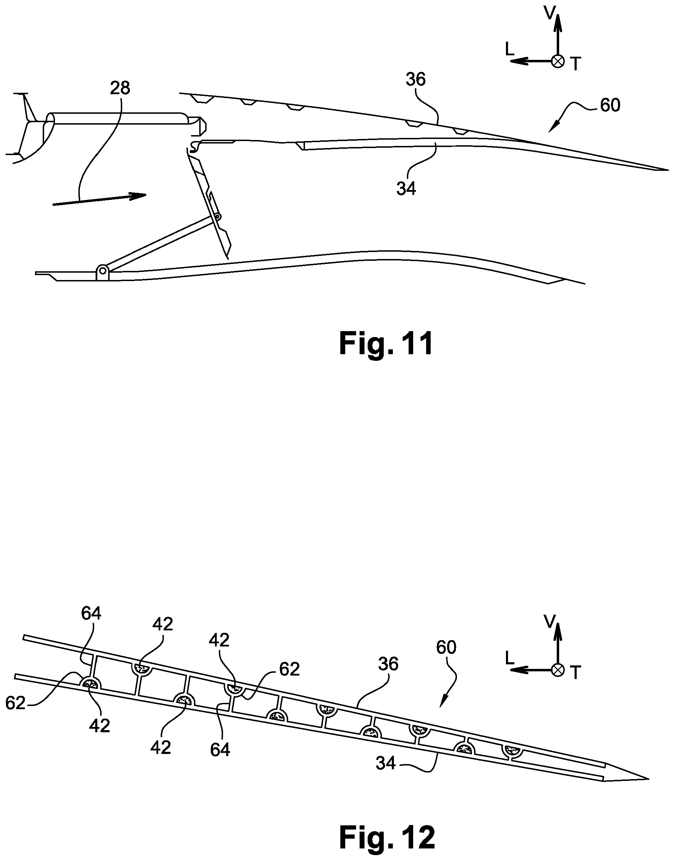

Les figures 11 et 12 illustrent une autre variante de réalisation de l'invention, appliquée à l'extrémité aval de la nacelle 26 de la figure 1. La figure 11 est une vue de détail de la partie encadrée de la figure 1 et montre une virole aval 60 de la nacelle formée par le rapprochement et la jonction des extrémités aval des parois 34, 36.

La nacelle 26 comporte un inverseur de poussée à capot coulissant. Le capot coulissant porte la virole 60 qui est alors mobile en translation par rapport aux rampes d'alimentation en huile, qui sont agencées sur une partie fixe de la nacelle 26.

L'huile est entraînée en circulation jusqu'au(x) réseau(x) de canalisations 42, au moyen d'un dispositif de pompage (non représenté). Les canalisations 42 s'étendent de façon circonférentielle autour de l'axe 24 de la virole 60.

La largeur de chaque canalisation est comprise entre un et cent millimètres par exemple. Le terme « largeur » doit s'entendre comme la largeur suivant la section longitudinale de la canalisation concernée.

Par souci d'efficacité, la virole 60 et les canalisations 42 sont réalisées dans un matériau qui est adapté pour dissiper efficacement les calories.

Selon un exemple de réalisation préféré, la virole 60 et les canalisations 42 peuvent également être réalisées en matériau composite ou en titane.

La figure 12 montre des réseaux de canalisations 42 de section semi-circulaire. La paroi interne 34 porte au moins un réseau de canalisations 42 et la paroi externe 36 porte au moins un réseau de canalisations 42.

Les canalisations 42 de la paroi 34 sont agencées en alternance régulière avec les canalisations 42 de la paroi 36, comme cela est visible dans le dessin.

Chaque canalisation 42 est délimitée par une cloison 62 formée d'une seule pièce avec la paroi 34, 36 correspondante, cette cloison 62 ayant une forme générale incurvée dont la concavité est orientée vers la paroi 34, 36 correspondante. Chaque cloison 62 d'une paroi est reliée par une nervure 64 à l'autre paroi, la nervure 64 étant également formée d'une seule pièce avec les parois 34, 36. Chaque nervure 64 s'étend depuis le sommet de la convexité de chaque cloison 62 jusqu'à la paroi 34, 36 opposée et s'étend sensiblement dans un plan normal à cette paroi opposée.

Cette conception permet d'optimiser les températures des parois 34, 36 afin de maximiser la puissance thermique échangée via les canalisations 42.

La virole 60 peut être obtenue par un procédé de fabrication du type extrusion qui permet d'obtenir un profilé qui est ensuite cintré en forme de virole 60. Aussi, la virole 60 peut être obtenue directement par pultrusion.

L'architecture mixte retenue dans les exemples de réalisation précités ou envisageables selon l'invention, mettant en série des échangeurs thermiques composés chacun de canalisations de liquide en parallèle situées sur une paroi externe ou une paroi interne de la nacelle, avec un sens de circulation faisant passer le liquide d'abord par le ou les échangeurs de la paroi interne puis par le ou les échangeurs de la paroi externe, permet de rendre réalisable et avantageuse l'utilisation couplée des surfaces interne et externe d'une nacelle comme surfaces d'échange thermique. Les architectures parallèles classiques ne permettent pas d'obtenir un échange thermique suffisant. Il en est de même avec les architectures séries qui n'assurent pas la fabricabilité des panneaux d'échange à causes des limitations en pression liées à la trop forte perte de charge.

L'architecture mixte proposée est optimale car elle permet à la fois d'assurer une dissipation thermique satisfaisante des calories du liquide, et une réduction du nombre de surfaces utilisées, tout en étant robuste aux phénomènes d'hétérogénéités de débit. Dans un exemple particulier de réalisation dans lequel les réseaux de canalisations 42 transportent de l'huile moteur, cette architecture mixte a permis d'obtenir les gains suivants (sur un besoin de dissipation thermique cible) :
- gain de masse de l'huile embarquée de 12 kg,
- réduction du nombre de surfaces utilisées : six surfaces d'échanges unitaires (par canalisation) sur les vingt surfaces d'échanges unitaires nécessaires dans l'architecture parallèle, soit une réduction de 70% de la masse de la structure par la diminution en particulier du nombre de canalisations,
- moins de canalisations en parallèle, soit une répartition du débit entre les canalisations plus simple, et une réduction du nombre d'interfaces et de canalisations, et
- harmonisation des échanges dans les canalisations sur tous les points de vol, soit moins d'hétérogénéité de débit, chaque bloc de surface travaillant dans des conditions proches.

## Revendications

1. Ensemble propulsif (10) pour aéronef, comportant une turbomachine entourée par une nacelle (26) comportant une lèvre annulaire (30) d'entrée d'air se prolongeant autour de la turbomachine par deux parois respectivement interne (34) et externe (36) annulaires destinées à être balayées par des flux d'air (28, 40) au moins lorsque l'aéronef est en vol, **caractérisé en ce que** :
- lesdites parois interne et externe comprennent ou portent chacune au moins un réseau de canalisations (42) destinées à transporter un liquide en contact avec ladite paroi interne ou ladite paroi externe, de façon à former des échangeurs de chaleur air-liquide respectivement interne et externe, les canalisations (42) de chaque échangeur de chaleur interne ou externe étant raccordées en parallèle entre elles,
- un réseau de canalisations de la paroi interne ayant au moins une sortie de liquide raccordée en série avec au moins une entrée de liquide d'un réseau de canalisations de la paroi externe, et
- l'ensemble propulsif comprend des moyens (46, 50, 52, 54) de circulation du liquide, raccordés à au moins une entrée de liquide d'un réseau de canalisations de la paroi interne en vue de son alimentation en liquide, et raccordés à au moins une sortie de liquide d'un réseau de canalisations de la paroi externe en vue de la récupération du liquide.

2. Ensemble propulsif (10) selon la revendication 1, dans lequel la turbomachine est reliée à la nacelle (26) par au moins un bras tubulaire (52) de passage de servitudes, ladite au moins une entrée de liquide du réseau de canalisations (42) de la paroi interne (34) et ladite au moins une sortie de liquide du réseau de canalisations (42) de la paroi externe (36) étant sensiblement situées au niveau de ce bras.

3. Ensemble propulsif (10) selon la revendication précédente, dans lequel ledit bras (52) est situé à 12 heures par analogie avec le cadran d'une horloge.

4. Ensemble propulsif (10) selon l'une des revendications précédentes, dans lequel lesdits réseaux de canalisations (42) ont une forme générale incurvée ou annulaire et s'étendent l'un autour de l'autre.

5. Ensemble propulsif (10) selon la revendication précédente, dans lequel les réseaux de canalisations (42) sont sectorisés et comprennent chacun au moins deux secteurs.

6. Ensemble propulsif (10) selon l'une des revendications précédentes, dans lequel ladite au moins une sortie de liquide d'un réseau de canalisations (42) de la paroi interne (34) est raccordée à ladite au moins une entrée de liquide d'un réseau de canalisations (42) de la paroi externe (36) par au moins un collecteur (48).

7. Ensemble propulsif (10) selon la revendication précédente, dans lequel ladite au moins une sortie de liquide du réseau de canalisations (42) de la paroi interne (34) est raccordée à un premier collecteur interne et ladite au moins une entrée de liquide du réseau de canalisations (42) de la paroi externe (36) est raccordée à un second collecteur externe, lesdits premier et second collecteurs étant reliés entre eux par une ou plusieurs conduites s'étendant sensiblement radialement par rapport audit axe.

8. Ensemble propulsif (10) selon l'une des revendications précédentes, dans lequel ladite entrée de liquide du réseau de canalisations (42) de la paroi interne (34) est raccordée à une rampe d'alimentation (46) et ladite sortie de liquide du réseau de canalisations de la paroi externe (36) est raccordée à une rampe de récupération (50).

9. Ensemble propulsif (10) selon l'une des revendications précédentes, dans lequel au moins une tôle (44) est rapportée et fixée, par exemple par brasage ou soudage, sur chacune desdites parois interne (34) et externe (36) et est conformée pour définir ledit réseau de canalisations (42) correspondant avec cette paroi.

10. Ensemble propulsif (10) selon la revendication précédente, en dépendance de la revendication 7 ou 8, dans lequel les collecteurs (48) et/ou les rampes (46, 50) sont rapportés et fixés, par exemple par brasage ou soudage, sur lesdites parois interne (34) et externe (36).

## Patentansprüche

1. Antriebseinheit (10) für ein Flugzeug, die eine Turbomaschine umfasst, welche von einer Gondel (26) umgeben ist, die eine ringförmige Lufteinlasslippe (30) umfasst, welche sich um die Turbomaschine herum mit zwei ringförmigen Wänden, jeweils eine innere (34) und eine äußere (36), fortsetzt, die dazu bestimmt sind, mindestens dann, wenn sich das Flugzeug im Flug befindet, von Luftströmen (28, 40) durchströmt zu werden, **dadurch gekennzeichnet, dass**:
- die innere und die äußere Wand je mindestens ein Netz aus Rohren (42) umfassen oder tragen, die dazu bestimmt sind, eine Flüssigkeit in Kontakt mit der inneren Wand oder der äußeren Wand zu leiten, sodass jeweils ein innerer und ein äußerer Luft/Flüssigkeit-Wärmetauscher gebildet wird, wobei die Rohre (42) jedes inneren oder äußeren Wärmetauschers parallel zueinander angeschlossen sind,
- ein Rohrnetz der inneren Wand mindestens einen Flüssigkeitsauslass aufweist, der mit mindestens einem Flüssigkeitseinlass eines Rohrnetzes der äußeren Wand in Reihe angeschlossen ist, und
- die Antriebseinheit Mittel (46, 50, 52, 54) zum Umwälzen der Flüssigkeit umfasst, die an mindestens einen Flüssigkeitseinlass eines Rohrnetzes der inneren Wand angeschlossen sind, um dieses mit Flüssigkeit zu speisen, und an mindestens einen Flüssigkeitsauslass eines Rohrnetzes der äußeren Wand angeschlossen sind, um die Flüssigkeit zurückzuführen.

2. Antriebseinheit (10) nach Anspruch 1, wobei die Turbomaschine über mindestens einen rohrförmigen Durchgangsarm (52) für Hilfsleitungen mit der Gondel (26) verbunden ist, wobei der mindestens eine Flüssigkeitseinlass des Rohrnetzes (42) der inneren Wand (34) und der mindestens eine Flüssigkeitsauslass des Rohrnetzes (42) der äußeren Wand (36) im Wesentlichen im Bereich dieses Armes liegen.

3. Antriebseinheit (10) nach dem vorstehenden Anspruch, wobei der Arm (52), in Analogie zum Zifferblatt einer Uhr, auf 12 Uhr liegt.

4. Antriebseinheit (10) nach einem der vorstehenden Ansprüche, wobei die Rohrnetze (42) eine allgemein bogenförmige oder ringförmige Form aufweisen und sich umeinander herum erstrecken.

5. Antriebseinheit (10) nach dem vorstehenden Anspruch, wobei die Rohrnetze (42) in Sektoren unterteilt sind und je mindestens zwei Sektoren umfassen.

6. Antriebseinheit (10) nach einem der vorstehenden Ansprüche, wobei der mindestens eine Flüssigkeitsauslass eines Rohrnetzes (42) der inneren Wand (34) über mindestens eine Sammelleitung (48) an den mindestens einen Flüssigkeitseinlass eines Rohrnetzes (42) der äußeren Wand (36) angeschlossen ist.

7. Antriebseinheit (10) nach dem vorstehenden Anspruch, wobei der mindestens eine Flüssigkeitsauslass des Rohrnetzes (42) der inneren Wand (34) an eine erste innere Sammelleitung angeschlossen ist, und der mindestens eine Flüssigkeitseinlass des Rohrnetzes (42) der äußeren Wand (36) an eine zweite äußere Sammelleitung angeschlossen ist, wobei die erste und die zweite Sammelleitung über eine oder mehrere Leitungen, die sich in Bezug auf die Achse im Wesentlichen radial erstrecken, miteinander verbunden sind.

8. Antriebseinheit (10) nach einem der vorstehenden Ansprüche, wobei der Flüssigkeitseinlass des Rohrnetzes (42) der inneren Wand (34) an eine Speiseleitung (46) angeschlossen ist, und der Flüssigkeitsauslass des Rohrnetzes der äußeren Wand (36) an eine Rückführleitung (50) angeschlossen ist.

9. Antriebseinheit (10) nach einem der vorstehenden Ansprüche, wobei auf jeder aus der inneren (34) und der äußeren (36) Wand mindestens ein Blech (44) aufgesetzt und zum Beispiel durch Schweißen oder Löten befestigt und so ausgestaltet ist, dass es das dieser Wand entsprechende Rohrnetz (42) bildet.

10. Antriebseinheit (10) nach dem vorstehenden Anspruch, in Abhängigkeit von Anspruch 7 oder 8, wobei die Sammelleitungen (48) und/oder die Leitungen (46, 50) auf der inneren (34) und der äußeren (36) Wand aufgesetzt und zum Beispiel durch Schweißen oder Löten befestigt sind.

## Claims

1. A propulsion assembly (10) for aircraft, comprising a turbomachine surrounded by a nacelle (26) comprising an annular air intake lip (30) extending around the turbomachine by two annular walls, inner (34) and outer (36), respectively, intended for being swept across by air flows (28, 40) at least when the aircraft is in flight, **characterized in that**:
- said inner and outer walls each comprise or support at least one network of pipes (42) intended for transporting a liquid in contact with said inner wall or said outer wall, so as to form air-liquid heat exchangers respectively inner and outer, the pipes (42) of each inner or outer heat exchanger being connected in parallel with each other,
- a network of pipes of the inner wall having at least one liquid outlet connected in series with at least one liquid intake of a network of pipes of the outer wall, and
- the propulsion assembly comprises means (46, 50, 52, 54) for circulating the liquid, connected to at least one liquid intake of a network of pipes of the inner wall for its liquid supply, and connected to at least one liquid outlet of the network of pipes of the outer wall for the recovery of the liquid.

2. The propulsion assembly (10) according to claim 1, wherein the turbomachine is connected to the nacelle (26) by at least one passage of ancillaries tubular arm (52), said at least one liquid intake of the network of pipes (42) of the inner wall (34) and said at least one liquid outlet of the network of pipes (42) of the outer wall (36) being substantially located at the level of this arm.

3. The propulsion assembly (10) according to the preceding claim, wherein said arm (52) is located at 12 o'clock by analogy with the dial of a clock.

4. The propulsion assembly (10) according to one of the preceding claims, wherein said networks of pipes (42) have a generally curved or annular shape and extend around each other.

5. The propulsion assembly (10) according to the preceding claim, wherein the networks of pipes (42) are segmented and each comprise at least two sectors.

6. The propulsion assembly (10) according to one of the preceding claims, wherein said at least one liquid outlet of a network of pipes (42) of the inner wall (34) is connected to said at least one liquid intake of a network of pipes (42) of the outer wall (36) by at least one collector (48).

7. The propulsion assembly (10) according to the preceding claim, wherein said at least one liquid outlet of the network of pipes (42) of the inner wall (34) is connected to a first inner collector and said at least one liquid intake of the network of pipes (42) of the outer wall (36) is connected to a second outer collector, said first and second collectors being connected together by one or more lines extending substantially radially with respect to said axis.

8. The propulsion assembly (10) according to one of the preceding claims, wherein said liquid intake of the network of pipes (42) of the inner wall (34) is connected to a feed ramp (46) and said liquid outlet of the network of pipes of the outer wall (36) is connected to a collection ramp (50).

9. The propulsion assembly (10) according to one of the preceding claims, wherein at least one sheet metal (44) is mounted and fixed, for example by brazing or welding, to each of said inner (34) and outer (36) walls and is shaped to define said network of pipes (42) corresponding to that wall.

10. The propulsion assembly (10) according to the preceding claim, dependent on claim 7 or 8, wherein the collectors (48) and/or ramps (46, 50) are mounted and fixed, for example by brazing or welding, to said inner (34) and outer (36) walls.
